# EUROPEAN PATENT SPECIFICATION

(11) **EP 1 959 515 B1**
(45) Date of publication and mention of the grant of the patent: **08.06.2011**
(21) Application number: 08101590.1
(22) Date of filing: 13.02.2008
(51) Int. Cl.: H01M 8/04

(54) **Fuel cartridge and fuel cell using the same**
Brennstoffkartusche und Brennstoffzelle damit
Cartouche de combustible et pile à combustible l'utilisant

(30) Priority: 15.02.2007 KR 20070016193
(43) Date of publication of application: 20.08.2008
(73) Proprietor: Samsung SDI Co., Ltd., Gyeonggi-do (KR)
(72) Inventor: Han, Ji-Seong, Suwon-si, Gyeonggi-do (KR); Kong, Sang-Jun, Suwon-si, Gyeonggi-do (KR); Cho, Sung-Yong, Suwon-si, Gyeonggi-do (KR); Lee, Han-Kyu, Suwon-si, Gyeonggi-do (KR)
(74) Representative: Grey, Ian Michael

(56) References cited:
- US-A1- 2003 129 464
- US-A1- 2004 001 987
- US-A1- 2006 151 494

## Description

The present disclosure relates to a fuel cartridge having a structure of a vinyl pack, and more particular to a fuel cartridge capable of preventing interference of fuel outflow due to contacting both sides of a container near an outlet when fuel contained in a flexible container is flowed out and a fuel cell system using the same.

A fuel cell which, generates electricity energy from hydrogen energy, is new energy source that protects the future environment. The fuel cell is a power generating system with low pollution and high efficiency, which can directly transform fuel energy, produced by an oxidation of the fuel, into electric energy. Gaseous fuels can be made using fossil fuels such as methane and natural gas, besides hydrogen, and liquid fuel such as methanol and hydrazine can be used as the fuel of the fuel cell. Fuel cell can be classified into phosphoric acid fuel cells (PAFC), molten carbon fuel cells (MCFC), solid oxide fuel cells (SOFC), polymer electrolyte membrane fuel cells (PEMFC), alkaline fuel cell (AFC), *etc*. according to kind of an electrolyte used. These fuel cells operate on basically the same principle, but they differ in the kind of fuel, operating temperature, catalyst, electrolyte, and so on.

Among the fuel cells, the polymer electrolyte membrane fuel cell (PEMFC) using a polymer as the electrolyte, has no risk of the corrosion or evaporation by the electrolyte and obtains high current density per unit area. Furthermore, since the polymer electrolyte membrane fuel cell (PEMFC) has advantages of a remarkably high output and a low operating temperature over other types fuel cells, has they have been actively developed as mobile power sources, such as for portable electronic equipment, or a transportable power sources, such as power sources for automobiles, as well as distributed power sources, such as a stationary power plants used in houses and public buildings, *etc*.

A direct methanol fuel cell (DMFC) is another kind of the fuel cell using a polymer membrane as an electrolyte. The DMFC does not use a fuel reformer and uses a liquid fuel such as methanol and the like, directly. The DMFC is suitable as portable or small sized power source since it operates at temperatures below 100 °C.

A fuel cartridge having a structure capable of easily supplying additional fuel is widely used as a fuel supply for both polymer electrolyte membrane fuel cells and direct methanol fuel cells. Furthermore, a vinyl pack is used for manufacturing of the fuel cartridge in order to reduce volume and weight of small-sized fuel cells. Such a fuel cartridge has been disclosed in the Japanese Patent Publication No. 2005-032598, which was published on February 3, 2005.

The present disclosure solves the above described and other problems. An objective is to provide a fuel cartridge capable of increasing coefficient of utilization of fuel and with a simple structure, a light weight, and a small size.

Another object is to provide a fuel cell with a light weight and a small size using the fuel cartridge.

It is known from US 2006/151494A to provide A fuel cartridge comprising a flexible container to store a liquid fuel, said container having sidewalls; an opening in the flexible container for the discharge of liquid fuel therefrom; and a channel-forming structure disposed inside the flexible container, at least a portion of which is disposed proximal to the opening, wherein the flexible container is configured to collapse as fuel flows out of the container through the opening such that the sidewalls come into contact with each other, the channel-forming structure being configured to maintain a fuel flow path to the opening between portions of the sidewalls lying in contact with each other.

A fuel cartridge according to the present invention is characterised in that the channel-forming structure comprises a fold in a sidewall of the flexible container, the fold protruding into the container so that a flow path is formed between the fold and said sidewall when said other side wall contacts the fold.

Another aspect provides a fuel cell comprising an electricity generator and the fuel cartridge supplying fuel to the electricity generator according to the above described aspect. The electricity generator comprises an electrolyte membrane and an anode and cathode electrodes positioned in both sides of the electrolyte membrane, and produces electric energy by an electrochemical reaction between fuel supplied to an anode electrode and an oxidant supplied to a cathode electrode.

In some embodiments, the fold is more rigid than the side of the flexible container.

In some embodiments, the flexible container comprises a sheet of a polymer material or plastic material. In some embodiments, the flexible container comprises transparent pocket shaped members, the edges of the members joined to each other.

Some embodiments further comprise an outer container surrounding the flexible container and exposing the connector.

In some embodiments, a flange of the connector is joined to and fixed to an opening of the flexible container. In some embodiments, the connector comprises a coupling structure configured for fluidly coupling to a removable transporting pipe. In some embodiments, the connector comprises a flow field-controlling structure configured to open and close by its own elasticity.

In some embodiments, the liquid fuel comprises a hydrocarbon based fuel in liquid phase.

In some embodiments, the fuel cell system further comprises: an electricity generator comprising an electrolyte membrane and an anode electrode and a cathode electrode positioned on opposite sides of the electrolyte membrane, wherein the electricity generator is configured to produce electric energy by an electrochemical reaction between a fuel supplied to the anode electrode and an oxidant supplied to the cathode electrode.

Some embodiments further comprise a fuel supplier configured for applying a predetermined pressure to the fuel cartridge, thereby discharging the fuel stored in the fuel cartridge and supplying the discharged fuel to the electricity generator. Some embodiments further comprise an oxidant supplier supplying an oxidant to the electricity generator.

Embodiments of the invention will now be described, by way of example only, and with reference to the accompanying drawings, in which:
FIG. 1 is a side cross-section of an embodiment of a fuel tank.
FIG. 2A is a top view another embodiment of a fuel cartridge.
FIG. 2B is a side view of the fuel cartridge in FIG. 1A.
FIG. 3A is a side cross section illustrating the driving principle of the fuel cartridge according to a comparative example.
FIG. 3B is a side cross section illustrating the driving principle of an embodiment of the fuel cartridge.
FIGS. 4 is a schematic cross-sectional view of an embodiment of channel-forming means.
FIGS. 5A and 5B are a cross sectional views of an embodiment of a connector.
FIG. 6 is a block diagram of an embodiment of a fuel cell using the fuel cartridge.

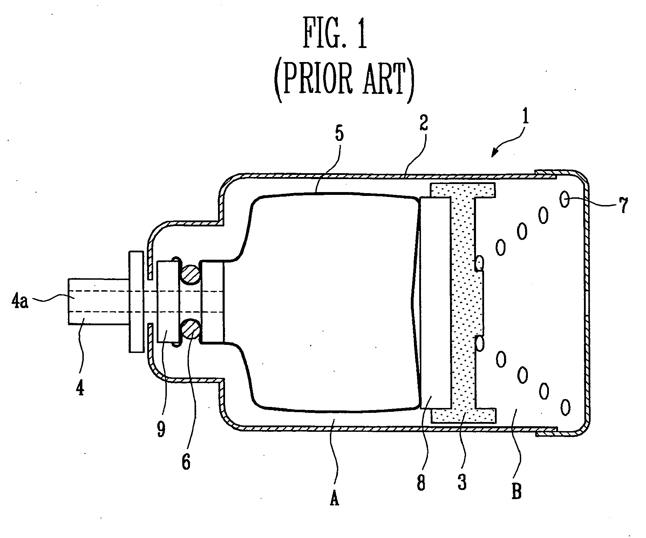

FIG. 1 is a fuel tank 1 comprising a pocket shaped partition 5 installed in a methanol receiving space A in an outer container 2, a plunger 3 installed to press the partition 5 by the elasticity of a pressure spring 7 disposed on one side of the outer container 2, an elastic body 8 installed between the plunger 3 and the partition 5, and a O-shaped ring 6 to fix a holder 9 to an opening through which liquid fuel contained in the partition 5 goes in and out. A hollow connector 4 has a hollowness 4a to the holder 9.

In order to force out the liquid fuel contained in the partition 5, the plunger 3 is used as a means to press one side of the partition 5 by the elasticity of the pressure spring 7, and the elastic body 8 is used as a means to smoothly force out methanol contained in the partition 5 by maintaining a proper contact state when the partition 5 wrinkles as it folds and shrinks.

The fuel tank 1 provides a coefficient of utilization by using a pocket shaped partition 5, the plunger 3, a pressure spring 7, and the elastic body 8. However, in the fuel tank 1, if the pocket shaped partition 5 is a flexible container such as a vinyl pack, the opening can be blocked by contact between portions of the partitions 5 to each other near the opening to which the holder 9 is connected when the partition 5 shrinks due to outflow of fuel. In this case, coefficient of utilization of fuel in the fuel tank is reduced since the fuel remaining in the partition 5 cannot flow out anymore. Furthermore, the fuel tank 1 includes the plunger 3, the pressure spring 7, and the elastic body 8 in order to press effectively one side of the partition 5 storing the liquid fuel. Therefore, volume and weight of the fuel tank 1 are increased.

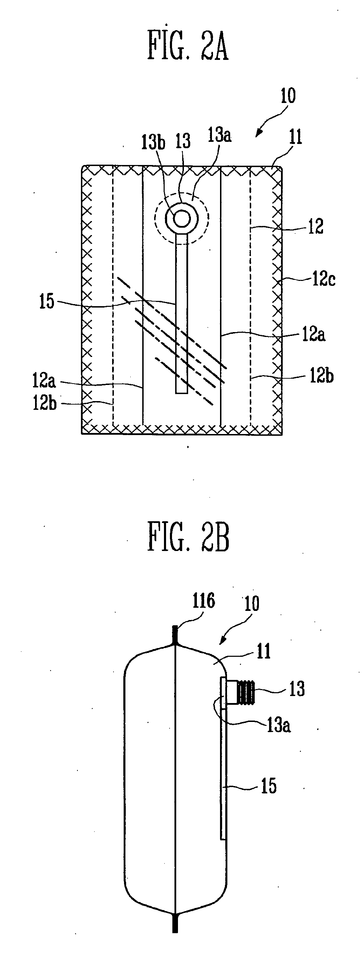

FIG. 2A is a front view of another embodiment of a fuel cartridge. FIG. 2B is a side view of the fuel cartridge in FIG. 2A. Referring to FIGS. 2A and 2B, the fuel cartridge 10 of the embodiment comprises a flexible container 11 to store liquid fuel, a connector 13 connecting to the flexible container 11 through which liquid fuel enters and exits the container 11, and a channel-forming structure or means 15, which extends to an inner space of the flexible container 11 and provides a flow field for the liquid fuel in the inside of the flexible container 11 when the flexible container 11 collapses or shrinks. And one end of the channel-forming structure or means 15 is positioned adjacent to the connector 13.

The flexible container 11 is implemented by a vinyl member 12, in which a part of the edge is folded in such a way to expand to a desired volume when the liquid fuel is stored in the inner space thereof. As shown in FIG. 2A, two sheets of the vinyl member 12 may be used to form the flexible container. A first sheet of the vinyl member 12 has a pair of corner parts 12a folded inwardly toward the center of the figure and a second sheet of the vinyl member 12 has a pair of corner parts 12b folded opposite to the folded direction of the corner parts 12a. And the edges 12c of the two sheets of the vinyl member 12 adhere each other forming an inner space having a pocket shape.

The flexible container 11 may comprise any suitable material, for example, at least one of polyester, polypropylene, polyethylene, polyethylene terephthalate, combinations thereof, a high polymer, or a plastic. For example, the flexible container 11 is implemented by the vinyl member 12 and the vinyl member 12 is implemented by polymeric materials.

The connector 13 is connected to the opening of the flexible container 11 and is a means to interconnect a fuel pump and the flexible container 11. The fuel pump and the flexible container 11 are a fuel supplier to supply fuel to the electricity generator by flowing out liquid fuel stored in the flexible container 11. A flange 13a of the connector 13 is joined to the inner edge of the opening of the flexible container 11. The connector 13 is provided the opening 13b for going in and out of the liquid stored in the flexible container 11. The connector 13 is implemented by plastic material.

The channel-forming structure or means 15 extends to the inner space of the flexible container 11 from the connector 13 connected to the flexible container 11. The channel-forming structure or means 15 permits most of the liquid in the flexible container 11 to flow out smoothly by providing a flow field between the inner space of the flexible container 11 and the opening 13b of the connector 13 when the liquid stored in the flexible container 11 otherwise could not be discharged smoothly, for example, when the flexible container 11 collapses and the two vinyl members 12 contact each other closely.

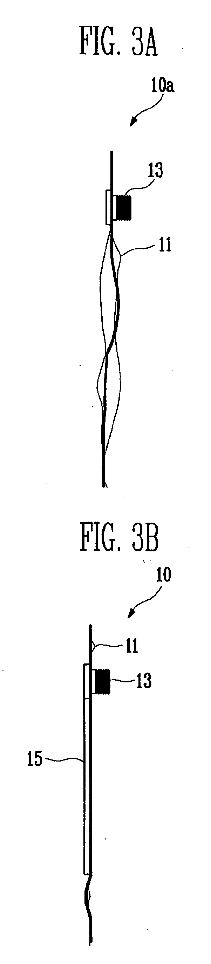

FIG. 3A is a side cross section illustrating the driving principle of the fuel cartridge according to a comparative example. FIG. 3B is a side cross section illustrating the driving principle of an embodiment of the fuel cartridge. As illustrated in FIG. 3A, the fuel cartridge 10a according to a comparative example includes a flexible container 11 and a connector 13 connected to the flexible container 11. When the liquid fuel stored in the flexible container 11 is discharged from the fuel cartridge 10a by the fuel supplier, the two sides of the vinyl member 12 contact closely since the flexible container 11 collapses. Particularly, if the two vinyl members 12 of the flexible container 11 contact closely near the connector 13, the liquid fuel stored in the inner space of the flexible container 11 cannot be discharged, even when the driving force of an output of the fuel supplier is increased. Therefore, the liquid fuel remains inside the flexible container 11.

However, as illustrated in FIG. 3B, although the two vinyl members 12 of the flexible container 11 are contact closely near the connector 13, when the liquid fuel is discharged, most of the liquid fuel remaining in the flexible container 11 can be discharged smoothly through a space formed at least a part between the two vinyl members 15 by the channel-forming structure or means, that is, forming a channel of liquid fuel inside the inner space of the flexible container 11 and the opening of the connector 13.

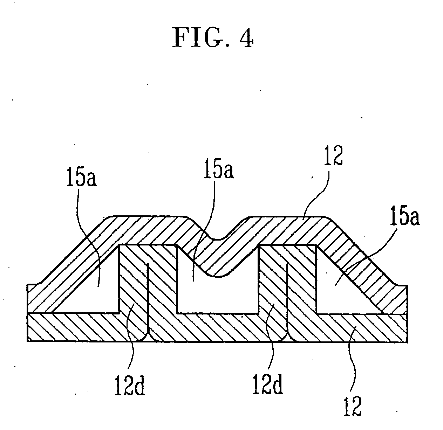

FIGS. 4 is a schematic cross-sectional view of an embodiment of chunnel-forming structure or means. Referring to FIG. 4, the channel-fonning structure or means can comprise at least one wrinkle unit or fold 12d formed or installed on the vinyl member 12 of the flexible container. That is, the channel-forming structure or means can comprise one or more spaces between two wrinkle units 12d, or spaces 15a formed on the sides of each wrinkle unit 12d. The wrinkle unit 12d is formed as a fold in the vinyl member, and is thereby more rigid than other parts of the vinyl member. Although the two sides of the vinyl member 12 are in close proximity, at least one serial space 15a interconnects the inner space and the opening of the connector formed by the wrinkle unit 12d, which can comprise various shapes such as a straight shape, a wave shape, or a comb shape.

An outer container transports, keeps, and protects the flexible container 11, and comprises any suitable material, such as plastic, wood; and metal. The connector 13 is joined and fixed to the outer container to combine or couple easily with a transporting pipe to transport the liquid fuel discharged from the flexible container 11, and the connector is exposed outside of the outer container. Furthermore, the connector 13 may have a removable coupling structure to combine easily with the transporting pipe. A coupling structure using a pipe coupling is used for the removable coupling structure.

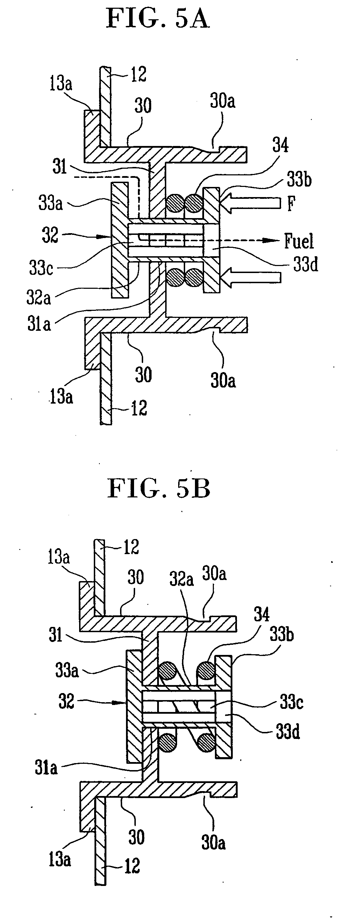

FIGS. 5A and 5B are cross sectional views of an embodiment of a connector for a fuel cartridge. Referring to FIG. 5A and 5B, the connector comprises a first frame 30 comprising a flange 13a and a hollow part; a second frame 31, which extends from an inner side of the first frame 30, blocking the hollow part of the first frame 30 and comprising a penetrating hole 31 a; a third frame 32 with a dumbbell shape, extending through the penetrating hole 31a of the first frame; and a elastic member 34 interposed between the second frame 31 and the third frame 32.

The first frame 30 penetrates an opening in the vinyl member 12, and the flange 13a of the first frame 30 is adhered and fixed to the edges of the opening. Here, the vinyl member 12 is the vinyl member of the flexible container 11 as described above. A coupling groove 30a is formed at the end of the first frame 30. The coupling groove 30a can be replaced with another coupling structure such as a screw thread structure.

The third frame 32 comprises a body 32a, which is the middle of the dumbbell shape, a first head 33a joined to a first end of the body 32a, and a second head 33b joined to a second end of the body 32a. The body 32a comprises the hollow part and a side opening 33c fluidly connected to the hollow part. And a second head 33b comprises a penetrating hole 33d fluidly connected to the hollow part of the body 32a. The first head 33a of the third frame has a cross section or a diameter less than the hollow part of the first frame 30.
The elastic member 34 is installed to surround the body 32a of the third frame 32 between the second frame 31 and the second head 33b. The elastic member 34 is compressed by a force F from a protrusion of the transporting pipe connected to the connector when the fuel cartridge is mounted. A spring with a coil shape can be used for the elastic member 34.

A use of the connector is as follows. When an outside force F is applied to the third frame 32 as the connector and the transporting pipe are joined, a predetermined part of the third frame 32 is moved into the penetrating hole 31 a of the second frame 31. And, the side opening 33c of the body 32a of the third frame 32 is fluidly coupled to the inner space of the flexible container of the fuel cartridge. Accordingly, the fuel stored in the flexible container is discharged to outside by flowing through, sequentially, the side opening 33c of the body 32a of the third frame 32, the hollow part of the body 32a, and the penetrating hole 33d of the second head 33b of the third frame 32. And, when the outside force F applied to the third frame 32 is removed as the connector and the transporting pipe are separated, a predetermined part of the third frame 32 is pushed out by the penetrating hole 31 a of the second frame 31 by elasticity of the elastic member 34. And, the fuel stored in the flexible container of the fuel cartridge is not discharged since the first head 33a of the third frame 32 blocks the penetrating hole 31a of the second frame 31. The connector is a flow field-controlling structure or means that opens and closes by its own elasticity.

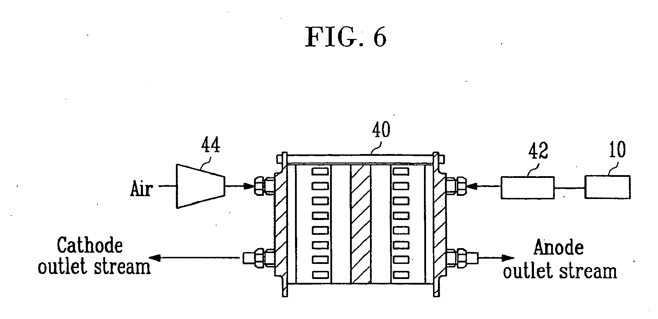

FIG. 6 is a schematic view of an embodiment of a fuel cell using the fuel cartridge. Referring to FIG. 6, the fuel cell of the embodiment comprises a electricity generator 40, the fuel cartridge 10 according to any of the embodiments, a fuel supplier 42 discharging liquid fuel stored in the fuel cartridge and supplying the discharged liquid fuel to the electricity generator 40, and an oxidant supplier 44 supplying an oxidant to the electricity generator 40.

The electricity generator 40 comprises a membrane-electrode assembly (MEA) comprising anode and cathode electrodes, each positioned on opposite sides of the MEA. The electricity generator 10 produces electric energy by an electrochemical reaction between fuel supplied to the anode electrode and an oxidant supplied to a cathode electrode. The fuel supplied to an anode electrode can be a liquid fuel and/or a gas fuel. When the electricity generator 40 uses a gas fuel, the fuel cell of the embodiment may further comprise a fuel reformer to generate a hydrogen-rich fuel in gas phase by reforming a liquid fuel. The electricity generator 40 can the comprise stack of a polymer electrolyte membrane fuel cell and/or a stack of a direct methanol fuel cell.

A fuel reformer of the polymer electrolyte membrane fuel cell can comprise a steam reformer producing reformed gas containing hydrogen mainly by contacting a reforming raw material and steam under high temperature, with a reforming catalyst, comprising, for example, at least one of nickel (Ni), rhodium (Rh), and ruthenium (Ru).

A hydrocarbon based fuel such as methanol, ethanol, petroleum, and the like, or a liquid biofuel can be used as the liquid fuel stored in the fuel cartridge 10.

The fuel supplier 42 comprises a device to transport the liquid fuel stored in the fuel cartridge 10 after it is forced out at a predetermined pressure. The fuel supplier 42 can be connected to the fuel cartridge through the transporting pipe which is easily removable. A liquid pump can be used for the fuel supplier 42.

The oxidant supplier 44 is a device to supply an oxidant to a cathode electrode of the electricity generator 40. Air, pure oxygen, and the like can be used as the oxidant. A blower, a compressor, and/or an air pump can be used as the oxidant supplier 44, but preferably the air pump can be used since the output of an air pump is easy to control and air pumps can be inexpensive. A rotary vane pump and diaphragm pump can be used as the air pump.

As described above, the coefficient of utilization of the liquid fuel stored in the fuel cartridge using the flexible container can be increased. Accordingly, volume and weight of the fuel cartridge corresponding to equal amount of fuel supply can be reduced. Therefore, the fuel cell with lighter weight and smaller size than typical fuel cells is provided by using the fuel cartridge.

Although a few embodiments have been shown and described, it would be appreciated by those skilled in the art that changes might be made in these embodiments without departing from the principles of the disclosure, the scope of which is defined in the claims.

## Claims

1. A fuel cartridge (10) comprising a flexible container (11) to store a liquid fuel, said container (11) having sidewalls, an opening in the flexible container (11) for the discharge of liquid fuel therefrom; and a channel-forming structure (15) disposed inside the flexible container (11), at least a portion of which is disposed proximal to the opening, wherein the flexible container (11) is configured to collapse as fuel flows out of the container (11) through the opening such that the sidewalls come into contact with each other, the channel-forming structure (15) being configured to maintain a fuel flow path to the opening between portions of the sidewalls lying in contact with each other, **characterised in that** the channel-forming structure (15) comprises a fold (12d) in a sidewall of the flexible container, the fold (12d) protruding into the container (11) so that a flow path (15a) is formed between the fold (12d) and said sidewall when said other side wall contacts the fold.

2. The fuel cartridge according to any preceding claim, wherein the flexible container (11) comprises a sheet of a polymer material or plastic material.

3. The fuel cartridge according to any preceding claim, wherein the flexible container (11) comprises transparent pocket shaped members, the edges (12c) of the members being joined to each other.

4. The fuel cartridge according to any preceding claim, further comprising an outer container (17) surrounding the flexible container (11) and exposing the opening.

5. The fuel cartridge according to any preceding claim, comprising a connector (13) having a flange (13a) that is fixed to the opening of the flexible container (11).

6. The fuel cartridge according to claim 5, wherein the connector (13) comprises a coupling structure configured for fluidly coupling the flexible container (11) to a removable transporting pipe.

7. The fuel cartridge according to claim 5 or claim 6, wherein the connector (13) comprises a flow field-controlling structure configured to open and close by its own elasticity.

8. The fuel cartridge according to any preceding claim, containing a hydrocarbon-based fuel in liquid phase.

9. A fuel cell system comprising an electricity generator (40) comprising an electrolyte membrane and an anode electrode and a cathode electrode positioned on opposite sides of the electrolyte membrane, wherein the electricity generator (40) is configured to produce electric energy by an electrochemical reaction between a fuel supplied to the anode electrode and an oxidant supplied to the cathode electrode; and the fuel cartridge (10) of any preceding claim configured to supply fuel to the electricity generator (40).

10. The fuel cell system according to claim 9, further comprising a fuel supplier (42) configured for applying a predetermined pressure to the fuel cartridge (10), thereby discharging the fuel stored in the fuel cartridge (10) and supplying the discharged fuel to the electricity generator (40).

11. The fuel cell system according to claim 9 or claim 10, further comprising an oxidant supplier (44) supplying an oxidant to the electricity generator (40).

## Patentansprüche

1. Brennstoffkartusche (10) umfassend einen flexiblen Behälter (11) zum Aufnehmen eines Flüssigbrennstoffs, wobei der Behälter (11) Seitenwände, eine Öffnung in dem flexiblen Behälter (11) zum Ablassen von Flüssigbrennstoff aus diesem sowie eine innerhalb des flexiblen Behälters (11) angeordnete kanalausbildende Struktur (15), von der mindestens ein Bereich in der Nähe der Öffnung angeordnet ist, aufweist, wobei der flexible Behälter so ausgebildet ist, dass er beim Ausfließen von Brennstoff aus dem Behälter (11) durch die Öffnung derart zusammenfällt, dass sich die Seitenwände gegenseitig berühren, wobei die kanalausbildende Struktur (15) so ausgebildet ist, dass zwischen Bereichen der aneinanderliegenden Seitenwände ein Brennstofffließpfad zu der Öffnung beibehalten wird, **dadurch gekennzeichnet, dass** die kanalausbildende Struktur (15) in einer Seitenwand des flexiblen Behälters einen Falz (12d) aufweist, wobei der Falz (12d) in den Behälter (11) hineinsteht, so dass ein Fließpfad (15a) zwischen dem Falz (12d) und der Seitenwand ausgebildet ist, wenn die andere Seitenwand den Falz berührt.

2. Brennstoffkartusche nach vorangegangenem Anspruch, wobei der flexible Behälter (11) eine Folie aus einem Polymermaterial oder Kunststoffmaterial umfasst.

3. Brennstoffkartusche nach einem der vorangegangenen Ansprüche, wobei der flexible Behälter (11) transparente, taschenförmige Elemente umfasst, deren Kanten (12c) zusammengefügt sind.

4. Brennstoffkartusche nach einem der vorangegangenen Ansprüche, weiterhin umfassend einen Außenbehälter (17), welcher den flexiblen Behälter (11) umgibt und die Öffnung freilässt.

5. Brennstoffkartusche nach einem der vorangegangenen Ansprüche, umfassend einen Verbinder (13) mit einem Flansch (13a), der an der Öffnung des flexiblen Behälters (11) befestigt ist.

6. Brennstoffkartusche nach Anspruch 5, wobei der Verbinder (13) eine Kopplungsanordnung umfasst, die zur Fluidverbindung des flexiblen Behälters (11) mit einem abnehmbaren Beförderungsrohr ausgebildet ist.

7. Brennstoffkartusche nach Anspruch 5 oder Anspruch 6, wobei der Verbinder (13) eine strömungsfeldregelnde Struktur aufweist, die zum Öffnen und Schließen aufgrund ihrer eigenen Elastizität ausgebildet ist.

8. Brennstoffkartusche nach einem der vorangegangenen Ansprüche, enthaltend eine auf Kohlenwasserstoff basierende Brennstoff-in-Flüssigkeit-Phase.

9. Brennstoffzellensystem umfassend einen Stromgenerator (40) mit einer Elektrolytmembran und einer Anodenelektrode sowie einer Kathodenelektrode, die auf gegenüberliegenden Seiten der Elektrolytmembran angeordnet sind, wobei der Stromgenerator (40) so ausgebildet ist, dass er elektrische Energie durch eine elektrochemische Reaktion zwischen einem der Anodenelektrode zugeführten Brennstoff und einem der Kathodenelektrode zugeführten Oxidationsmittel erzeugt; sowie die Brennstoffkartusche (10) nach einem der vorangegangenen Ansprüche, die so ausgebildet ist, dass sie dem Stromgenerator (40) Brennstoff zuführt.

10. Brennstoffzellensystem nach Anspruch 9, weiterhin umfassend eine Brennstoffzufuhr (42), die so ausgebildet ist, dass sie die Brennstoffkartusche (10) mit einem vorbestimmten Druck beaufschlagt, wodurch der in der Brennstoffkartusche (10) aufgenommene Brennstoff abgelassen wird und der abgelassene Brennstoff dem Stromgenerator (40) zugeführt wird.

11. Brennstoffzellensystem nach Anspruch 9 oder Anspruch 10, weiterhin umfassend eine Oxidationsmittelzufuhr (44) zum Zuführen eines Oxidationsmittels an den Stromgenerator (40).

## Revendications

1. Cartouche de combustible (10) comprenant un réservoir flexible (11) pour stocker un combustible liquide, ledit réservoir (11) présentant des parois latérales, une ouverture dans le réservoir flexible (11) pour en évacuer le combustible liquide ; et une structure (15) formant un canal disposée à l'intérieur du réservoir flexible (11), dont au moins une partie est disposée à proximité de l'ouverture, où le réservoir flexible (11) est configuré pour s'affaisser à mesure que le combustible sort du réservoir (11) à travers l'ouverture de sorte que les parois latérales rentrent en contact les unes avec les autres, la structure (15) formant un canal étant configurée pour maintenir un chemin d'écoulement du combustible vers l'ouverture entre les parties des parois latérales se trouvant en contact les unes avec les autres, **caractérisée en ce que** la structure (15) formant un canal comprend un pli (12d) dans une paroi latérale du réservoir flexible, le pli (12d) faisant saillie à l'intérieur du réservoir (11) de sorte qu'un chemin d'écoulement (15a) soit formé entre le pli (12d) et ladite paroi latérale lorsque ladite autre paroi latérale est placée en contact avec le pli.

2. Cartouche de combustible selon la revendication précédente, dans laquelle le réservoir flexible (11) comprend une feuille en matériau polymère ou en matière plastique.

3. Cartouche de combustible selon l'une des revendications précédentes, dans laquelle le réservoir flexible (11) comprend des éléments transparents en forme de poche, les bords (12c) des éléments étant reliés les uns aux autres.

4. Cartouche de combustible selon l'une des revendications précédentes, comprenant en outre un réservoir externe (17) entourant le réservoir flexible (11) et exposant l'ouverture.

5. Cartouche de combustible selon l'une des revendications précédentes, comprenant un raccord (13) présentant une bride (13a) qui est fixée à l'ouverture du réservoir flexible (11).

6. Cartouche de combustible selon la revendication 5, dans laquelle le raccord (13) comprend une structure de couplage configurée pour coupler de manière fluidique le réservoir flexible (11) à un tuyau de transport amovible.

7. Cartouche de combustible selon la revendication 5 ou la revendication 6, dans laquelle le raccord (13) comprend une structure de commande de champ d'écoulement configurée pour s'ouvrir et se fermer par son élasticité propre.

8. Cartouche de combustible selon l'une des revendications précédentes, contenant un combustible à base d'hydrocarbure en phase liquide.

9. Système de pile à combustible comprenant un générateur d'électricité (40) comprenant une membrane électrolytique, une électrode anodique et une électrode cathodique placées sur des côtés opposés de la membrane électrolytique, où le générateur d'électricité (40) est configuré pour produire de l'énergie électrique par une réaction électrochimique entre un combustible fourni à l'électrode anodique et un comburant fourni à l'électrode cathodique ; et la cartouche de combustible (10) de l'une des revendications précédentes configurée pour fournir du combustible au générateur d'électricité (40).

10. Système de pile à combustible selon la revendication 9, comprenant en outre un distributeur de combustible (42) configuré pour appliquer une pression prédéterminée sur la cartouche de combustible (10), déchargeant ainsi le combustible stocké dans la cartouche de combustible (10) et distribuant le combustible déchargé au générateur d'électricité (40).

11. Système de pile à combustible selon la revendication 9 ou la revendication 10, comprenant en outre un distributeur de comburant (44) fournissant un comburant au générateur électrique (40).
